# FASCICULE DE BREVET EUROPEEN

(11) **EP 0 461 942 B1**
(45) Date de publication et mention de la délivrance du brevet: **20.07.1994**
(21) Numéro de dépôt: 91401211.7
(22) Date de dépôt: 07.05.1991
(51) Int. Cl.: G09B 9/32

(54) **Dispositif de visualisation grand angle pour simulateur de faible encombrement**
Grosswinkeldisplay für einen Simulator mit kleinem Platzbedarf
Wide angle display for a simulator of small floor space requirements

(30) Priorité: 01.06.1990 FR 9006872
(43) Date de publication de la demande: 18.12.1991
(73) Titulaire: THOMSON-CSF, 75008 Paris (FR)
(72) Inventeur: Lacroix, Michel, F-92045 Paris la Défense (FR); Henique, Michel, F-92045 Paris la Défense (FR)
(74) Mandataire: Chaverneff, Vladimir

(56) Documents cités:
- EP-A- 0 358 559
- GB-A- 2 039 468
- US-A- 4 234 891
- US-A- 4 348 185
- US-A- 4 439 157
- US-A- 4 743 200
- IEEE SPECTRUM. vol. 22, no. 3, Mars 1985, NEW YORK US pages 38 - 47; M.A.FISCHETTI ET AL.: 'Simulating the right stuff '

## Description

La présente invention se rapporte à un dispositif de visualisation grand angle pour simulateur de faible encombrement.

Pour restituer des images dans un simulateur, tel qu'un simulateur d'aéronef, on a généralement recours à des systèmes tels que des moniteurs associés à une optique de renvoi à l'infini ou à des systèmes collimatés hors d'axe à écran sphérique et miroirs, ce miroir pouvant être une sphère de grand diamètre (plusieurs mètres). De tels systèmes fonctionnent correctement mais ont un encombrement et un poids souvent très élevés, et peuvent nécessiter une infrastructure complexe.

On connaît par ailleurs, d'après le document américain US-A-4 743 200, des dispositifs de visualisation à optique à lentilles et miroir, fixés sur un casque porté par l'utilisateur. Ces dispositifs sont généralement de faible encombrement et de faible poids, mais leur champ visuel est réduit et leur rendement lumineux faible.

La présente invention a pour objet un dispositif de visualisation d'images simulées qui soit simple, de faible encombrement, et qui permette de restituer les images avec un champ le plus grand possible et le meilleur rendement lumineux possible.

Le dispositif de visualisation conforme à l'invention comporte pour la vision centrale un dispositif de collimation à l'infini à miroir sphérique solidaire d'un casque porté par l'utilisateur, associé à un projecteur distant relié d'une part par fibre optique à un dispositif optique de reprise fixé sur le casque, et d'autre part à un générateur d'images, le générateur d'images étant relié à un dispositif détecteur de position de la tête de l'utilisateur portant le casque pour l'asservissement de la zone de vision centrale aux mouvements de la tête, et il est caractérisé par le fait que le dispositif de collimation est un dispositif hors d'axe comportant un miroir sphérique semi-réfléchissant situé sensiblement au niveau des yeux de l'utilisateur, sur lequel est formée par le dispositif de reprise une image haute résolution, et en ce qu'il comporte pour la vision périphérique un écran sphérique et un dispositif de projection grand angle à distance finie.

La présente invention sera mieux comprise à la lecture de la description détaillée d'un mode de réalisation, pris à titre d'exemple non limitatif, et illustré par le dessin annexé, sur lequel
- la figure 1 est une vue schématique de la partie visualisation de zone d'intérêt d'un dispositif conforme à l'invention,
- la figure 2 est une vue de dessus de la partie optique, solidaire du casque, du dispositif de la figure 1,
- la figure 3 est une vue de côté de la partie optique de la figure 2,
- les figures 4 et 5 sont respectivement une vue de côté et une vue de dessus du dispositif de l'invention, et
- la figure 6 est une vue schématique d'un mode de réalisation de projecteur pouvant être utilisé dans le dispositif de la figure 1.

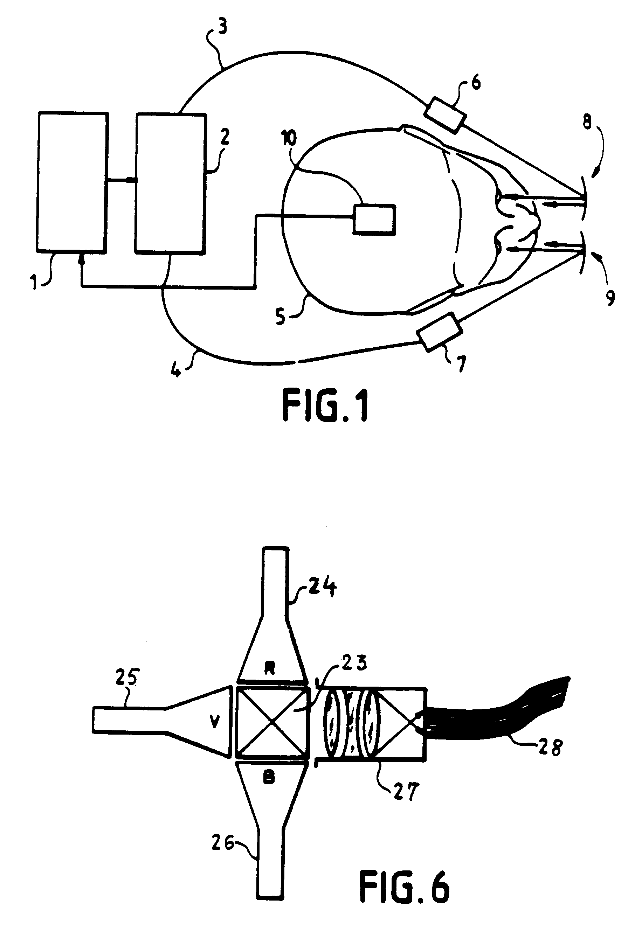

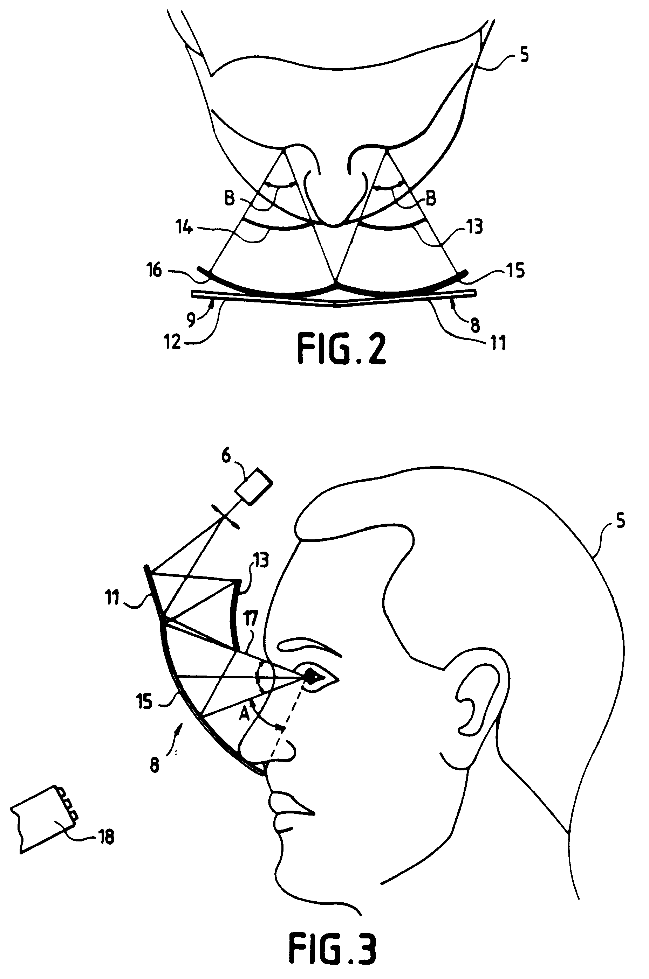

Le dispositif de visualisation de zone d'intérêt ou "visuel de casque" 5A représenté en figure 1 comporte essentiellement un générateur d'images 1, un projecteur 2, une fibre optique 3,4 de transport d'image relative à chaque oeil de l'utilisateur 5, un dispositif optique de reprise 6,7 fixé en bout de chaque fibre optique, et un dispositif optique de formation d'images correspondant 8,9, décrit plus en détail ci-dessous en référence aux figures 2 et 3.

Les éléments 1 et 2 peuvent être éloignés de l'utilisateur, les fibres optiques 3 et 4 ayant la longueur nécessaire. Les éléments 6 à 9 sont fixés de façon appropriée sur un casque (non représenté) porté par l'utilisateur 5. En outre, on fixe sur ce casque un dispositif 10, détecteur de la position de la tête de l'utilisateur, de type connu en soi. Ce dispositif 10 est relié au générateur d'images 1 pour y commander, de façon connue en soi, les déplacements d'une "fenêtre" correspondant à la zone d'intérêt devant être vue par l'utilisateur.

On a représenté en détail sur les figures 2 et 3 les dispositifs optiques 8 et 9. Ces dispositifs 8 et 9 sont identiques et comportent chacun un canal de formation d'images. Dans le présent exemple, chaque canal a un champ B horizontal d'environ 50°.

Les dispositifs 8 et 9 comportent : un miroir de renvoi plan (11,12 respectivement), un écran sphérique (13,14 respectivement), et un miroir sphérique, au moins en partie semi-réfléchissant (15,16 respectivement). Les faces concaves des écrans et des miroirs sphériques sont tournées vers l'utilisateur. Les miroirs plans et les écrans sont situés au-dessus d'un plan horizontal passant par les centres des yeux de l'observateur, alors que les miroirs sphériques semi-transparents 15,16 sont sensiblement au niveau des yeux de l'utilisateur 5. Ces miroirs 15,16 sont fixés à quelques centimètres des yeux de l'utilisateur. Lorsque l'utilisateur regarde droit devant lui, son champ visuel vertical instantané, qui est d'environ 40°, couvre la partie supérieure des miroirs 15,16, la partie inférieure de ces miroirs correspondant à un champ vertical d'environ 40° (angle A sur la figure 3) que l'utilisateur peut couvrir en baissant les yeux. Les écrans 13,14 sont disposés par rapport aux miroirs 15,16 de façon que lorsque l'utilisateur regarde droit devant lui la limite supérieure 17 de son champ vertical soit pratiquement tangente aux bords inférieurs de ces écrans et aux bords supérieurs des miroirs 15,16 (voir figure 3). Les dispositifs 6,7 sont des dispositifs, de type connu en soi, à lentilles permettant de projeter sur les miroirs 11,12 les images transportées par les fibres 3,4. Les images formées par les dispositifs 6,7 sur les miroirs 11,12 sont renvoyées par ces miroirs 11,12 sur les écrans 13,14. L'utilisateur 5 peut ainsi, en regardant les miroirs 15,16 voir les images formées sur les écrans 13,14.

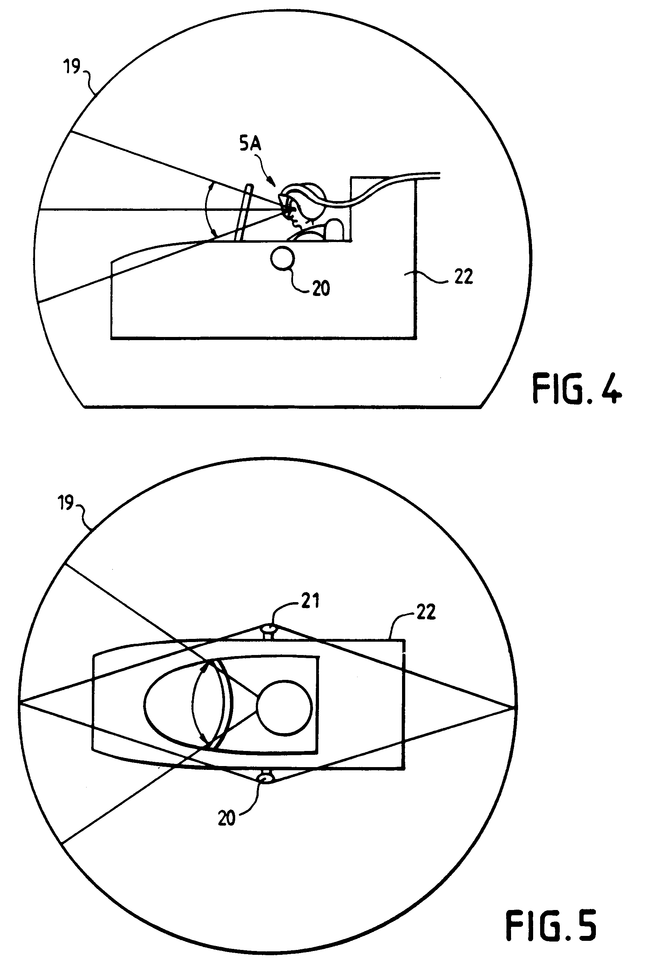

Bien entendu, le générateur d'images et les projecteurs sont réalisés de façon à assurer une parfaite superposition des images vues par l'oeil droit et l'oeil gauche dans la zone de recouvrement des champs visuels de ces deux yeux. Les miroirs 15 et 16 sont semi-réfléchissants pour permettre à l'utilisateur de voir à travers eux les instruments du tableau de bord 18 et la sphère 19 décrite ci-dessous en référence aux figures 4 et 5.

Le dispositif 10, captant les mouvements de la tête de l'utilisateur, envoie au générateur d'images 1 des informations permettant de commander, de façon connue en soi, les déplacements relatifs de la "zone d'intérêt" vue par l'utilisateur en correspondance avec les mouvements de sa tête.

La sphère, ou plus exactement portion de sphère 19, sur laquelle on visualise à distance finie une image à très grand champ (180 à 360°) a un rayon relativement petit (1,5 à 2 m environ). Cette sphère est réalisée en tout matériau approprié, à la fois le plus léger possible mais solide, et présentant le meilleur coefficient de réflexion optique possible. Bien entendu, le matériau de base de la sphère peut ne pas avoir de bonnes qualités de réflexion optique, et être revêtu d'une couche de matériau bon réflecteur.

La projection d'images sur la sphère 19 se fait grâce à deux objectifs à très grand angle (du type "fish eye") 20 et 21. Ces objectifs sont disposés, de préférence, sur les côtés du siège 22 de l'utilisateur, de façon à pouvoir projeter sur la sphère une image de pratiquement 360°, au moins dans le sens horizontal. Bien entendu, si l'on ne désire pas projeter une image à aussi grand champ, on peut se contenter d'un seul objectif disposé frontalement, ou utiliser deux objectifs, mais de plus faible angle.

Les images projetées sur la sphère se rapportent à la vision périphérique de l'utilisateur, c'est-à-dire principalement à l'espace environnant la "zone d'intérêt" collimatée qui est visualisée sur les dispositifs 8 et 9, et qui vient en quelque sorte s'incruster dans l'image à grand champ projetée sur la sphère.

Le dispositif de visualisation décrit ci-dessus offre un champ visuel très important : le champ instantané total correspond aux limites visuelles de l'observateur, sauf le champ vertical, qui est limité vers le haut (par la disposition des écrans 13,14 dont les bords inférieurs imposent la limite référencée 17 en figure 3) à une valeur d'environ 20° (alors que ce champ vertical instantané n'est limité vers le bas que par la limite visuelle de l'observateur, à environ 70°). Grâce au fait que les miroirs 15,16 sont semi-transparents, l'atténuation de la scène extérieure (projetée sur la sphère 19) n'est que d'environ 10 à 20 %.

On a représenté en figure 6, un mélangeur dichroïque utilisable avec des tubes haute brillance. Ce mélangeur comporte un prisme dichroïque 23 à trois faces duquel sont accolés des tubes cathodiques à haute brillance 24 à 26, respectivement rouge, vert et bleu. A une quatrième face du prisme 23, on accole un dispositif 27 d'optique de couplage à une fibre optique 28. Ce dispositif mélangeur est utilisé pour chacun des canaux de visualisation relatifs à chaque oeil de l'observateur.

Selon un mode de réalisation de l'invention, on utilise un projecteur à "valve de lumière" ou à cristaux liquides de types bien connu en soi.

Si le projecteur utilisé est du type à tubes haute brillance, on réalise la correction des distorsions géométriques des projecteurs, et de toute la partie optique du simulateur de l'invention dans les projecteurs. Il est relativement facile d'y faire toutes les corrections nécessaires, en particulier pour obtenir la superposition parfaite des images dans la zone de recouvrement (s'étendant, dans le sens horizontal, sur 30 à 40° environ) des champs visuels relatifs à l'oeil droit et à l'oeil gauche.

Si le projecteur utilisé est du type à valve de lumière ou à cristaux liquides, on réalise la correction des distorsions géométriques dans le générateur d'image car il n'est pas possible d'effectuer de corrections dans les projecteurs.

## Revendications

1. Dispositif de visualisation grand angle pour simulateur comportant un dispositif de collimation à l'infini à miroir (15, 16) sphérique solidaire d'un casque porté par l'utilisateur, associé à un projecteur distant (2) relié d'une part par fibre optique (3, 4) à un dispositif optique de reprise (6, 7) fixé sur le casque, et d'autre part à un générateur d'images (1), le générateur d'images étant relié à un dispositif (10) détecteur de position de la tête de l'utilisateur portant le casque pour l'asservissement de la zone de vision centrale aux mouvements de la tête, caractérisé par le fait que le dispositif de collimation est un dispositif hors d'axe comportant un écran (13, 14) et un miroir sphérique (15, 16) semi-réfléchissant situé sensiblement au niveau des yeux de l'utilisateur sur lequel est formée par le dispositif de reprise une image haute résolution, et en ce qu'il comporte pour la vision périphérique un écran sphérique et un dispositif de projection grand angle (20, 21) à distance finie.

2. Dispositif selon la revendication 1, caractérisé par le fait que la surface sphérique (19) est au moins une portion de sphère d'un rayon d'environ 1,5 à 2 mètres.

3. Dispositif selon la revendication 1 ou 2, caractérisé par le fait que le dispositif de projection grand angle sur une surface sphérique comporte au moins un objectif grand angle, du type "fish eye" (20, 21).

4. Dispositif selon l'une des revendications précédentes, caractérisé par le fait que les miroirs sphériques sont au moins en partie semi-réfléchissants.

5. Dispositif selon l'une des revendications précédentes, caractérisé par le fait que le projecteur est du type à valve de lumière.

6. Dispositif selon l'une des revendications 1 à 4, caractérisé par le fait que le projecteur est du type à cristaux liquides.

7. Dispositif selon l'une des revendications 1 à 4, caractérisé par le fait que le projecteur est du type à tubes cathodiques à haute brillance.

8. Dispositif selon l'une des revendications 1 à 6, caractérisé par le fait que la correction des distorsions géométriques est effectuée dans le générateur d'images.

9. Dispositif selon la revendication 7, caractérisé par le fait que la correction des distorsions géométriques est réalisée dans les projecteurs.

10. Simulateur, caractérisé par le fait qu'il comporte un dispositif de visualisation selon l'une quelconque des revendications précédentes.

## Patentansprüche

1. Weitwinkeldisplay für einen Simulator, mit einer im Unendlichen kollimierenden Vorrichtung mit einem sphärischen Spiegel (15, 16), der fest mit einem vom Benutzer getragenen Helm verbunden ist, in Zuordnung zu einem entfernten Projektor (2), der einerseits über Lichtleitfasern (3, 4) mit einer an dem Helm befestigten Aufnahmeoptik und andererseits mit einem Bildgenerator (1) verbunden ist, wobei der Bildgenerator mit einer Vorrichtung (10) zum Erfassen der Position des Kopfs des den Helm tragenden Benutzers verbunden ist, um das zentrale Gesichtsfeld den Kopfbewegungen nachzuführen, dadurch gekennzeichnet, daß die Kollimationsvorrichtung eine außerhalb der Achse liegende Vorrichtung mit einem Schirm (13, 14) und einem halbreflektierenden sphärischen Spiegel (15, 16) ist, der im wesentlichen auf der Höhe der Augen des Benutzers angeordnet ist und auf dem durch die Aufnahmevorrichtung ein hochauflösendes Bild erzeugt wird, und daß sie für die Randsicht einen sphärischen Schirm und eine Weitwinkelprojektionsvorrichtung (20) mit endlichem Abstand enthält.

2. Vorrichtung nach Anspruch 1, dadurch gekennzeichnet, daß die sphärische Fläche (19) wenigstens ein Teil einer Kugel mit einem Radius von etwa 1,5 bis 2 m ist.

3. Vorrichtung nach Anspruch 1 oder 2, dadurch gekennzeichnet, daß die Weitwinkelprojektionsvorrichtung auf eine sphärische Fläche wenigstens ein Weitwinkelobjektiv (20, 21) vom Typ "Fischauge" enthält.

4. Vorrichtung nach einem der vorhergehenden Ansprüche, dadurch gekennzeichnet, daß die sphärischen Spiegel zumindest teilweise halbreflektierend sind.

5. Vorrichtung nach einem der vorhergehenden Ansprüche, dadurch gekennzeichnet, daß der Projektor vom Typ mit Lichtventil ist.

6. Vorrichtung nach einem der Ansprüche 1 bis 4, dadurch gekennzeichnet, daß der Projektor vom Typ mit Flüssigkristallen ist.

7. Vorrichtung nach einem der Ansprüche 1 bis 4, dadurch gekennzeichnet, daß der Projektor vom Typ mit Katodenstrahlröhren mit hoher Leuchtdichte ist.

8. Vorrichtung nach einem der Ansprüche 1 bis 6, dadurch gekennzeichnet, daß die Korrektur geometrischer Verzerrungen im Bildgenerator bewirkt wird.

9. Vorrichtung nach Anspruch 7, dadurch gekennzeichnet, daß die Korrektur geometrischer Verzerrungen im Projektor durchgeführt wird.

10. Simulator, dadurch gekennzeichnet, daß er eine Displayvorrichtung nach einem der vorhergehenden Ansprüche enthält.

## Claims

1. Wide-angle visual display device for a simulator including a device for collimation at infinity with a spherical mirror (15, 16) integral with a helmet worn by the user, associated with a remote projector (2) linked, on the one hand, by optical fibre (3, 4) to an optical repeater device (6, 7) fixed onto the helmet, and, on the other hand, to an image generator (1), the image generator being linked to a device (10) detecting the position of the head of the user wearing the helmet for slaving the central viewing area to the movements of the head, characterized in that the collimation device is an off-axis device including a screen (73, 74) and a semi-reflecting spherical mirror (15, 16) situated substantially at the level of the eyes of the user on which a high-resolution image is formed by the repeater device, and in that, for peripheral vision, it includes a spherical screen and a device for wide-angle projection (20, 21) at finite distance.

2. Device according to Claim 1, characterized in that the spherical surface (19) is at least a spherical portion with a radius of about 1.5 to 2 metres.

3. Device according to Claim 1 or 2, characterized in that the device for wide-angle projection onto a spherical surface includes at least one wide-angle objective lens, of the "fish eye" type (20, 21).

4. Device according to one of the preceding claims, characterized in that the spherical mirrors are semi-reflecting, at least in part.

5. Device according to one of the preceding claims, characterized in that the projector is of the light-valve type.

6. Device according to one of Claims 1 to 4, characterized in that the projector is of the liquid-crystal type.

7. Device according to one of Claims 1 to 4, characterized in that the projector is of the type with high-brightness cathode-ray tubes.

8. Device according to one of Claims 1 to 6, characterized in that the correction of the geometric distortions is performed in the image generator.

9. Device according to Claim 7, characterized in that the correction of the geometric distortions is carried out in the projectors.

10. Simulator, characterized in that it includes a visual-display device according to any one of the preceding claims.
